# FASCICULE DE BREVET EUROPEEN

(11) **EP 3 942 678 B1**
(45) Date de publication et mention de la délivrance du brevet: **17.01.2024**
(21) Numéro de dépôt: 20708544.0
(22) Date de dépôt: 10.02.2020
(51) Int. Cl.: H02K 1/32, F16C 3/02, H02K 7/00, H02K 5/20

(54) **ARBRE CREUX DE ROTOR DIVISE LONGITUDINALEMENT COMPORTANT AU MOINS UNE AILETTE FORGEE S'ETENDANT A L'INTERIEUR**
LÄNGSGETEILTE ROTORHOHLWELLE MIT MINDESTENS EINEM GESCHMIEDETEN FLÜGEL, DER SICH NACH INNEN ERSTRECKT
LONGITUDINALLY DIVIDED HOLLOW ROTOR SHAFT COMPRISING AT LEAST ONE FORGED FIN EXTENDING ON THE INSIDE

(30) Priorité: 19.03.2019 FR 1902792
(43) Date de publication de la demande: 26.01.2022
(73) Titulaire: Stellantis Auto SAS, 78300 Poissy (FR)
(72) Inventeur: COURTEAUX, Marc, 25400 AUDINCOURT (FR); BUREAU, Gildas, 92500 RUEIL MALMAISON (FR)
(86) Numéro de dépôt international: PCT/FR2020/050228
(87) Numéro de publication internationale: WO 2020/188162

(56) Documents cités:
- FR-A1- 3 011 143
- US-A- 429 175
- US-A- 663 748

## Description

Le domaine de l'invention concerne un arbre de rotor de machine électrique comportant une cavité de refroidissement à l'intérieur de l'arbre et un procédé de fabrication dudit arbre de rotor.

Dans les architectures où le rotor est au coeur de la machine électrique les échanges thermiques sont beaucoup plus faibles qu'au niveau du stator qui est généralement en contact avec le carter refroidi. Lors du fonctionnement d'une machine électrique, celle-ci génère de la chaleur dont les sources sont les pertes joules dans les bobinages, les pertes Fer dans les tôles magnétiques, les pertes par courant de Foucault dans les aimants ou bien encore les pertes par friction dans les roulements. Le confinement du rotor et les températures de fonctionnement élevées sont susceptibles d'altérer le rotor et ses composants sensibles en cas de dissipation thermique insuffisante, notamment les aimants. Pour éviter ce problème, on a généralement recours à l'adjonction de métaux rares pour la réalisation d'aimants, augmentant de fait leur cout.

Pour éviter la montée en température du rotor, l'évacuation de chaleur s'effectue le plus souvent par conduction thermique par des matériaux adaptés aux températures élevées et des systèmes de refroidissement par canaux où un fluide de refroidissement peut circuler.

On connait des documents de brevets US429175A ou US663748A un arbre de rotor muni d'un corps creux. De plus, ledit brevet US429175A décrit un corps creux étant formé de deux pièces de corps assemblées longitudinalement selon l'axe.

On connait en outre le document FR3011143A1 décrivant un arbre de rotor muni d'un corps creux et d'ailettes de refroidissement à l'intérieur de l'arbre dans lequel les ailettes sont des pièces additionnelles destinées à favoriser la dissipation thermique de l'arbre et des aimants vers des sources froides. Selon cette technique, les ailettes de la forme d'une pale ont pour fonction d'aspirer l'air dans l'évidement de l'arbre pour faire circuler de l'air sur les parois cylindriques de la cavité interne. Ces ailettes peuvent être mobiles en rotation par rapport au corps de l'arbre ou être solidaires du corps. Il est prévu également que des drains thermiques ponctionnent des calories directement dans la masse magnétique via des trous traversant. Le document US20030146667A1 décrit également un système de refroidissement par insertion de pales de refroidissement à l'intérieur de l'arbre et le document US20180147937A1 montre un radiateur tubulaire déformable glissé à l'intérieur de l'arbre pour refroidir le corps du rotor.

Ces systèmes de dissipation thermique requièrent l'insertion de pièces additionnelles complexifiant le processus d'assemblage du moteur électrique. Ces systèmes sont par conséquent inadaptés aux productions industrielles de grand volume. De plus, les pièces additionnelles réduisent la conductivité thermique entre le rotor et l'air ambiant.

Pour simplifier l'assemblage du moteur électrique et réduire la masse du moteur, le document WO2017104560A1 décrit un arbre de rotor fabriqué selon une technique de fabrication additive, par exemple impression en trois dimensions, pour concevoir au sein d'un même et unique corps de l'arbre une structure alvéolaire. Cette structure permet de réduire la masse du rotor mais aussi de favoriser la dissipation thermique par l'intermédiaire d'un circuit de refroidissement traversant les alvéoles. Cependant, il est notoire que la fabrication par impression en trois dimensions n'est pas adaptée à une industrialisation en volume du fait du temps et du coût de fabrication.

Il existe donc un besoin de palier les problèmes précités. Un objectif de l'invention est de proposer un rotor ayant des performances de dissipation thermique améliorées par rapport aux systèmes à ailettes, ou moyen de refroidissement additionnel, ou bien encore à cavités internes. Un autre objectif est de proposer un système de refroidissement présentant un coût de fabrication réduit.

Plus précisément, l'invention concerne un arbre d'un rotor de machine électrique mobile en rotation autour d'un axe longitudinal comportant un corps creux en acier définissant une cavité intérieure de passage d'un fluide de refroidissement à l'intérieur de l'arbre. Selon l'invention, le corps creux est formé par au moins deux pièces de corps assemblées longitudinalement selon ledit axe, et au moins une première des deux pièces de corps comporte au moins une première ailette de refroidissement forgée en surface de la cavité.

Selon une variante, la première ailette s'étend radialement à l'intérieur de la cavité selon un plan perpendiculaire à l'axe longitudinal.

Selon une variante, la première ailette s'étend dans un plan transversal par rapport à l'axe longitudinal.

Selon une variante l'arbre comporte un orifice d'entrée du fluide de refroidissement dans la cavité et un orifice de sortie du fluide de refroidissement vers l'extérieur de la cavité.

Selon une variante, la deuxième pièce de corps comporte au moins une deuxième ailette de refroidissement forgée en surface de la cavité.

Selon une variante, la première et la deuxième ailette sont disposées en décalage l'une par rapport à l'autre longitudinalement à l'axe longitudinal.

Selon une variante, la première et la deuxième ailette sont disposées en regard l'une de l'autre et sont séparées par un passage.

L'invention concerne également un procédé de fabrication d'un arbre de rotor selon l'un quelconque des modes de réalisation précédents sur une presse à forger. Selon l'invention, le procédé comporte :
- Une première étape de forgeage d'au moins deux pièces de corps qui sont chacune estampées sur la presse à forger et au cours de laquelle au moins la première ailette est formée en surface de la paroi de la première pièce de corps,
- Une deuxième étape d'assemblage des deux pièces de corps entre elles longitudinalement à l'axe longitudinal pour définir, une fois assemblées, la cavité du corps creux à l'intérieur de laquelle s'étend au moins ladite première ailette.

L'invention concerne également une machine électrique comprenant un rotor muni d'un arbre mobile en rotation autour d'un axe longitudinal et une masse magnétique fixée sur l'arbre, dans laquelle l'arbre est conforme à l'un quelconque des modes de réalisation précédents.

Il est également prévu un véhicule automobile comportant une machine électrique selon l'invention.

L'invention permet d'améliorer le refroidissement de l'arbre rotatif d'une machine électrique sans apport d'une pièce additionnelle dédiée au refroidissement, et par conséquent sans résistance de contact entre les pièces qui aurait pour effet de réduire la conductivité thermique. De plus, le procédé de fabrication est particulièrement adapté aux processus industriels de l'industrie automobile, notamment aux cadences élevées des lignes de production. Le processus de fabrication par forgeage s'appuie sur des technologies maitrisées, robustes et économiques.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente schématiquement un rotor de machine électrique comportant un arbre selon l'invention.
[Fig.2] représente plusieurs vues en coupe d'un demi arbre de rotor conformément à l'invention.
[Fig.3] représente deux demi arbres d'un rotor selon l'invention conformément à un mode de réalisation préférentiel.
[Fig.4] représente une première variante de l'étape d'assemblage des demi arbres du procédé de fabrication.
[Fig. 5] représente une deuxième variante de l'étape d'assemblage des demi arbre du procédé de fabrication selon l'invention.

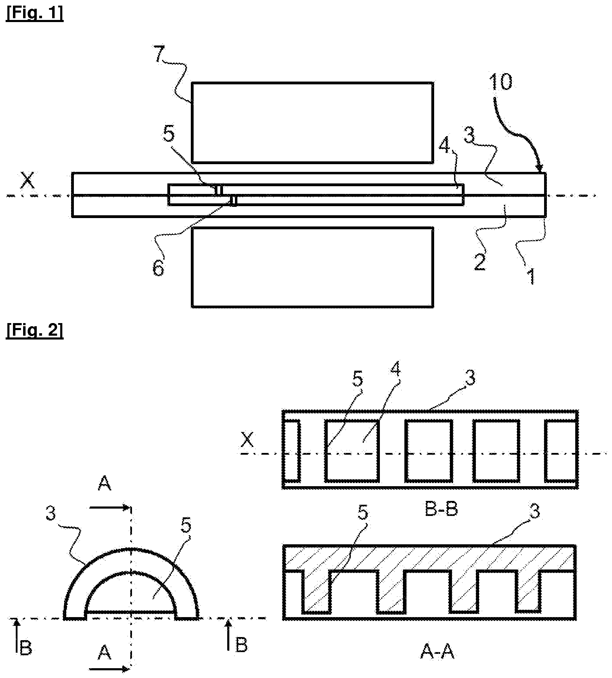

L'invention trouve une application particulièrement avantageuse pour les rotors de machine électrique, notamment pour les véhicules automobiles. La figure 1 représente schématiquement un rotor comportant un arbre 10 mobile en rotation autour d'un axe longitudinal X et une masse magnétique 7 constituée d'aimants. La masse magnétique 7 est montée solidaire à l'arbre de rotation 10. L'arbre 10 s'étend de part et d'autre des extrémités de la masse magnétique 7.

Selon l'invention, l'arbre 10 comporte un corps creux 1 constitué de deux pièces de corps longitudinales formant deux demi-arbres (appelées également demi-coquilles) 3, 2. Les deux demi-arbres sont des pièces en acier assemblées sur un plan longitudinal de l'arbre 10. Les deux demi-arbres forment une cavité interne 4 lorsqu'ils sont assemblés ayant pour fonction de refroidir l'arbre 10 du rotor lorsque la machine électrique est en rotation. Plus précisément, les deux demi-arbres sont soudés le long du plan longitudinal.

La cavité interne 4 s'étend sur une partie seulement de l'arbre du rotor de part et d'autre des extrémités de la masse magnétique, comme cela est illustré en figure 1. On n'écarte pas néanmoins la possibilité que la cavité s'étende sur toute la longueur de l'arbre 10, lequel forme alors un arbre tubulaire sur toute sa longueur.

Selon l'invention, chaque demi-arbre 2, 3 comporte une ailette de refroidissement 5, 6, (ou plusieurs) formée (s) et intégrée (s) au corps de chaque demi-arbre 3, 2 respectif.

Chaque ailette 5, 6 de l'arbre 10 est formée en surface de la paroi intérieure de la cavité 4 par forgeage de la surface des demi-arbres 3, 2 lors de la fabrication des demi-arbres 2, 3. Une ailette et le demi-arbre respectif forment ainsi un corps unique en acier sans discontinuité de matière entre une ailette et le corps du demi-arbre. De cette manière, on augmente la conductivité thermique en comparaison d'ailettes rapportées, comme c'est le cas par exemple des drains thermiques, des pâles rotatives internes ou le tube de refroidissement inséré à pression dans l'arbre.

Les demi-arbres 2, 3 et par conséquent les ailettes intégrées 6, 5, sont en acier et ont pour fonction d'augmenter la surface d'échange thermique à l'intérieur de la cavité pour dissiper la chaleur transmise à l'arbre 10 (par courant électrique, frottement) vers l'intérieur de la cavité 4. La dissipation des calories s'opère par échange thermique avec un flux d'air circulant dans la cavité 4 lors de la rotation du rotor. La surface d'échange thermique des demi-arbres, du fait de la surface supplémentaire des d'ailettes, est supérieure à la surface d'une cavité à paroi cylindrique démunie d'ailette améliorant ainsi la dissipation thermique. De plus, l'acier est un matériau présentant un coefficient d'échange thermique particulièrement adapté à la dissipation thermique.

De préférence, toute la longueur des parois de la cavité 4 est recouverte d'ailettes intégrées pour augmenter la surface d'échange thermique, similairement à un radiateur d'équipement électronique possédant un profil d'ailette en peigne. On n'écarte pas la possibilité de munir un seul des deux demi-arbre d'ailettes intégrés.

Par ailleurs, afin de permettre la circulation d'air à l'intérieur de la cavité 4, la cavité communique avec l'air extérieur à la machine électrique via au moins un orifice d'entrée et un orifice de sortie d'air, non représentés sur la figure 1. Les orifices de circulation d'air peuvent être des trous traversant le corps 10 ou bien les extrémités de la cavité 4 lorsque la cavité 4 s'étend jusqu'aux extrémités de l'arbre 10.

La circulation de l'air est effective sous l'action de la rotation de l'arbre par la force centrifuge de l'arbre en rotation, par aspiration d'air à travers l'orifice d'entrée. Il est envisageable qu'un autre fluide de refroidissement puisse circuler à l'intérieur de la cavité 4, tel de l'eau, huile ou liquide réfrigérant, par l'action rotative de l'arbre 10 ou par un moyen actif de circulation du fluide de refroidissement.

La figure 2 représente des vues en coupe du demi-arbre 3 selon un mode de réalisation de l'invention. Le demi-arbre 3 seulement est représenté et une première coupe AA illustre une section longitudinale et la coupe BB représente une deuxième vue longitudinale orientée sur l'axe de rotation X en vue de dessus. Le demi-arbre 2, décrit en figure 1, présente un profil de cavité intérieur identique symétrique, ou alors avec des ailettes positionnée en décalage longitudinalement.

Dans ce mode de réalisation, la ou les ailettes 5 sont en forme de demi-lune, ou sensiblement semi circulaire. De préférence, elles sont plusieurs, ici représentées par simplification au nombre de quatre, et sont réparties le long de l'axe longitudinal X pour accroitre la surface d'échange thermique.

Les ailettes s'étendent radialement dans des plans perpendiculaires au plan d'assemblage des demi-arbres positionné au niveau de l'axe longitudinal X. Selon ce mode de réalisation, les ailettes sont transversales par rapport à l'axe longitudinal X.

Comme on le voit sur la coupe A-A, les ailettes s'étendent tout au plus sur un demi-diamètre. Il est envisageable que les ailettes s'étendent sur une longueur inférieure à la longueur du rayon de l'arbre, ceci pour permettre la circulation de l'air dans la cavité 4.

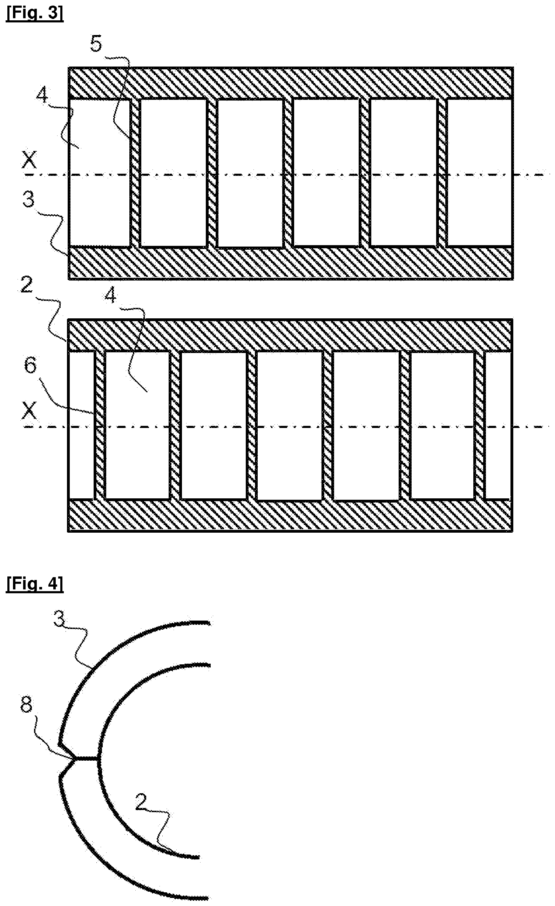

La figure 3 représente cette fois le demi-arbre 3 et le demi-arbre 2 l'un à côté de l'autre pour illustrer un mode de réalisation préférentiel pour la disposition des ailettes entre les demi-arbres 2, 3. Les ailettes 5, 6, lorsque les deux demi-arbres sont assemblés, sont disposées en décalage, dit en quinconce, entre le demi-arbre 2 et le demi-arbre 3. Cette disposition particulière permet d'étendre au maximum la surface des ailettes 5, 6 depuis la paroi des demi-arbres jusqu'à l'axe central longitudinal X de rotation. On améliore ainsi la dissipation thermique. La disposition en quinconce permet également la formation d'un passage pour l'air longitudinalement sans prévoir d'orifices de circulation à travers les ailettes.

Dans une variante, les ailettes peuvent être positionnées en face à face les unes par rapport aux autres entre les deux demi-arbres mais doivent alors être de longueurs variables entre elles pour autoriser le passage de l'air.

On a représenté en figure 3 des ailettes de forme semi-circulaire. Cette forme n'est pas obligatoire. Les ailettes pourraient être d'une autre forme, par exemple rectangulaire.

L'invention concerne également le procédé de fabrication de l'arbre du rotor dans lequel les ailettes sont forgées dans le corps creux de l'arbre. Lors d'une première étape du procédé, deux pièces de corps, les demi-arbres en forme de demi coquille, sont estampées sur une presse à forger à partir d'un lopin d'acier. Lors de cette première étape, au moins une ailette, et de préférence plusieurs ailettes sont formées en surface de la paroi intérieure lors du forgeage de ladite paroi intérieure. Puis lors d'une deuxième étape, les deux demi-arbres sont assemblés entre eux selon un plan longitudinal pour définir, une fois assemblés, la cavité du corps creux.

La conception du corps de l'arbre en deux demi coquilles permet le forgeage de la paroi intérieure de l'arbre. Ce procédé est avantageux car il peut être mis en oeuvre sur des chaines de forgeage à haute cadence pour un coût inférieur à des ailettes fabriquées par technologie d'impression en trois dimensions.

On n'écarte pas la possibilité de fabriquer l'arbre du rotor en trois parties longitudinales ou plus, puis d'assembler ces trois parties (ou plus) après leur forgeage.

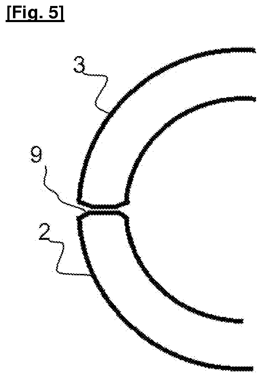

En figure 4 on a représenté une première variante de réalisation de l'étape d'assemblage. Les deux demi-arbres 2, 3 sont assemblés par soudage MAG (« Metal Active Gaz » en anglais) au niveau de deux zones de soudage 8 positionnées sur un plan de soudage longitudinal. En figure 5 on a représenté une deuxième variante de réalisation de l'étape d'assemblage. Les deux demi-arbres 2, 3 sont assemblés par soudage à induction et écrasement du plan de joint 9.

L'invention s'applique à tout type de machine électrique muni d'un arbre de rotor, et à tout type d'application industrielle requérant un refroidissement de la machine électrique. L'invention trouvera une application particulièrement adaptée aux véhicules automobiles.

## Revendications

1. Arbre (10) d'un rotor de machine électrique mobile en rotation autour d'un axe longitudinal (X) comportant un corps creux (1) en acier définissant une cavité (4) intérieure de passage d'un fluide de refroidissement à l'intérieur de l'arbre, ce corps creux (1) étant formé par au moins deux pièces de corps (2, 3) assemblées longitudinalement selon ledit axe (X), **caractérisé en ce qu'**au moins une première des deux pièces de corps (2) comporte au moins une première ailette de refroidissement (6) forgée en surface de la cavité (4).

2. Arbre (10) selon la revendication 1, **caractérisé en ce que** la première ailette (6) s'étend radialement à l'intérieur de la cavité (4) selon un plan perpendiculaire à l'axe longitudinal (X).

3. Arbre selon la revendication 1 ou 2, **caractérisé en ce que** la première ailette (6) s'étend dans un plan transversal par rapport à l'axe longitudinal (X).

4. Arbre selon l'une quelconque des revendications 1 à 3, **caractérisé en ce que** l'arbre comporte un orifice d'entrée du fluide de refroidissement dans la cavité et un orifice de sortie du fluide de refroidissement vers l'extérieur de la cavité.

5. Arbre selon l'une quelconque des revendications 1 à 4, **caractérisé en ce que** la deuxième pièce de corps (3) comporte au moins une deuxième ailette de refroidissement (5) forgée en surface de la cavité (4).

6. Arbre selon la revendication 5, **caractérisé en ce que** la première et la deuxième ailette (5, 6) sont disposées en décalage l'une par rapport à l'autre longitudinalement à l'axe longitudinal (X).

7. Arbre selon la revendication 5, **caractérisé en ce que** la première et la deuxième ailette (5, 6) sont disposées en regard l'une de l'autre et sont séparées par un passage.

8. Procédé de fabrication d'un arbre de rotor selon l'une quelconque des revendications 1 à 7 sur une presse à forger, **caractérisé en ce qu'**il comporte :
- Une première étape de forgeage d'au moins deux pièces (2 3) de corps creux (1) qui sont chacune estampées sur la presse à forger et au cours de laquelle au moins la première ailette (6) est formée en surface de la paroi intérieure de la première pièce (2) de corps creux
- Une deuxième étape d'assemblage des deux pièces de corps (2, 3) entre elles longitudinalement à l'axe longitudinal (X) pour définir, une fois assemblées, la cavité du corps creux (1) à l'intérieur de laquelle s'étend au moins ladite première ailette (6).

9. Machine électrique comprenant un rotor muni d'un arbre (10) mobile en rotation autour d'un axe longitudinal (X) et une masse magnétique (7) fixée sur l'arbre, **caractérisé en ce que** l'arbre est conforme à l'une quelconque des revendications 1 à 7.

10. Véhicule automobile comportant une machine électrique selon la revendication 9.

## Patentansprüche

1. Schaft (10) eines Rotors einer elektrischen Maschine, die um eine Längsachse (X) rotierend bewegbar ist und einen hohlen Stahlkörper (1) umfasst, der einen inneren Hohlraum (4) für den Durchgang einer Kühlflüssigkeit durch das Innere der Welle definiert, wobei dieser Hohlkörper (1) aus mindestens zwei Körperteilen (2, 3) besteht, die in Längsrichtung entlang der Achse (X) zusammengesetzt sind, **dadurch gekennzeichnet, dass** mindestens ein erster der beiden Körperteile (2) mindestens eine erste Kühlrippe aufweist (6) an der Oberfläche des Hohlraums (4) angeschmiedet.

2. Schaft (10) nach Anspruch 1, **dadurch gekennzeichnet, dass** sich die erste Finne (6) radial innerhalb des Hohlraums (4) entlang einer Ebene senkrecht zur Längsachse (X) erstreckt.

3. Schaft nach Anspruch 1 oder 2, **dadurch gekennzeichnet, dass** die erste Finne (6) in einer Querebene zur Längsachse (X) verläuft.

4. Schacht nach einem der Ansprüche 1 bis 3, **dadurch gekennzeichnet, dass** der Schacht eine Eintrittsöffnung für die Kühlflüssigkeit in den Hohlraum und eine Austrittsöffnung für die Kühlflüssigkeit zur Außenseite des Hohlraums hin aufweist.

5. Schacht nach einem der Ansprüche 1 bis 4, **dadurch gekennzeichnet, dass** der zweite Körperteil (3) mindestens eine zweite Kühlrippe (5) aufweist, die an der Oberfläche des Hohlraums (4) angeschmiedet ist.

6. Schaft nach Anspruch 5, **dadurch gekennzeichnet, dass** die erste und die zweite Finne (5, 6) in Längsrichtung zur Längsachse (X) zueinander versetzt angeordnet sind.

7. Schaft nach Anspruch 5, **dadurch gekennzeichnet, dass** die erste und die zweite Flosse (5, 6) einander zugewandt angeordnet und durch einen Durchgang getrennt sind.

8. Verfahren zur Herstellung einer Rotorwelle nach einem der Ansprüche 1 bis 7 auf einer Schmiedepresse, **dadurch gekennzeichnet, dass** es Folgendes umfasst:
- Ein erster Schritt des Schmiedens von mindestens zwei Teilen (2, 3) von Hohlkörpern (1), die jeweils auf der Schmiedepresse gestanzt werden und bei dem mindestens die erste Rippe (6) auf der Oberfläche der Innenwand geformt wird das erste Hohlkörperstück (2),
- Ein zweiter Schritt des Zusammenfügens der beiden Körperteile (2, 3) in Längsrichtung entlang der Längsachse (X), um nach dem Zusammenbau den Hohlraum des Hohlkörpers (1) zu definieren, in dem sich mindestens die erste Rippe (6) erstreckt ).

9. Elektrische Maschine mit einem Rotor, der mit einer um eine Längsachse (X) drehbaren Welle (10) und einer an der Welle befestigten magnetischen Masse (7) ausgestattet ist, **dadurch gekennzeichnet, dass** die Welle einem der Ansprüche 1 bis 7 entspricht.

10. Kraftfahrzeug umfassend eine elektrische Maschine nach Anspruch 9.

## Claims

1. Shaft (10) of a rotor of an electric machine movable in rotation around a longitudinal axis (X) comprising a hollow body (1) made of steel defining an interior cavity (4) for the passage of a cooling fluid through the interior of the shaft, this hollow body (1) being formed by at least two body parts (2, 3) assembled longitudinally along said axis (X), **characterized in that** at least one first of the two parts of body (2) comprises at least one first cooling fin (6) forged on the surface of the cavity (4).

2. Shaft (10) according to claim 1, **characterized in that** the first fin (6) extends radially inside the cavity (4) along a plane perpendicular to the longitudinal axis (X).

3. Shaft according to claim 1 or 2, **characterized in that** the first fin (6) extends in a plane transverse to the longitudinal axis (X).

4. Shaft according to any one of claims 1 to 3, **characterized in that** the shaft comprises an inlet orifice for the cooling fluid into the cavity and an outlet orifice for the cooling fluid towards the outside of the cavity.

5. Shaft according to any one of claims 1 to 4, **characterized in that** the second body part (3) comprises at least one second cooling fin (5) forged on the surface of the cavity (4).

6. Shaft according to claim 5, **characterized in that** the first and the second fin (5, 6) are arranged offset from one another longitudinally to the longitudinal axis (X).

7. Shaft according to claim 5, **characterized in that** the first and the second fin (5, 6) are arranged facing each other and are separated by a passage.

8. Method of manufacturing a rotor shaft according to any one of claims 1 to 7 on a forging press, **characterized in that** it comprises:
- A first step of forging at least two pieces (2, 3) of hollow bodies (1) which are each stamped on the forging press and during which at least the first fin (6) is formed on the surface of the interior wall of the first piece (2) of hollow body,
- A second step of assembling the two body parts (2, 3) together longitudinally at the longitudinal axis (X) to define, once assembled, the cavity of the hollow body (1) inside which at least said first fin (6) extends.

9. Electric machine comprising a rotor provided with a shaft (10) movable in rotation around a longitudinal axis (X) and a magnetic mass (7) fixed on the shaft, **characterized in that** the shaft conforms to the any one of claims 1 to 7.

10. Motor vehicle comprising an electric machine according to claim 9.
